Europäisches Patentamt

European Patent Office

Office européen des brevets

(11) Veröffentlichungsnummer: **0 284 984**
**A1**

## (12) EUROPÄISCHE PATENTANMELDUNG

(21) Anmeldenummer: 88104653.6

(22) Anmeldetag: 23.03.88

(51) Int. Cl.⁴: **A01D 46/02** , A01D 90/12

(30) Priorität: 01.04.87 CS 2274/87

(43) Veröffentlichungstag der Anmeldung:
**05.10.88 Patentblatt 88/40**

(84) Benannte Vertragsstaaten:
**BE DE FR GB ,**

(71) Anmelder: **AGROZET KONCERN
ZEMEDELSKEHO STROJIRENSTVI
Sumavska 31
Brno(CS)**

(72) Erfinder: **Zbynek, Albrecht, Dipl.-Ing.
Netusilova 1
Prostejov(CS)**

(74) Vertreter: **Patentanwälte Beetz sen. - Beetz
jun. Timpe - Siegfried - Schmitt-Fumian-
Mayr
Steinsdorfstrasse 10
D-8000 München 22(DE)**

(54) **Transportwagen für Hopfenreben.**

(57) Der Transportwagen weist einen muldenförmigen Laderaum mit zylinderförmigem Boden
(2) auf. Am Vorderteil (1) ist eine Vorrichtung (6)
zum Anschließen und Abtrennen eines Rotationsspeichers (7) der Hopfenreben angeordnet. Eine
teleskopische Vorrichtung (12) ermöglicht
Änderungen des Achsabstandes zwischen der Achse
(13) des Transportwagens und der des Zugmittels je
nach dem Arbeitsregime.

FIG. 1

EP 0 284 984 A1

## Transportwagen für Hopfenreben

Die Erfindung betrifft ein Sattelbeförderungsmittel, insbesondere einen Transportwagen für die Ernte und den Transport von Hopfenreben, das mit einer auf dem Rahmen angeordneten Mulde versehen ist, der auf der Achse untergebracht ist.

Für die Beförderung der Hopfenreben vom Hopfengarten zur stationären Pflückstraße werden vorwiegend einfache Einzwecksattelanhänger mit einem festen Boden verwendet, auf welche die Reben entweder manuell oder maschinell durch eine Niederreißeinrichtung niedergerissen werden. Die Reben werden dann bündelweise von Hand in die Förderbahn der Erntestraße eingehängt. Diese Transportmittel sind zwar einfach und zuverlässig aber die Aufhängung der Reben in die Erntestraße ist anstrengend und die Arbeitsleistung der Arbeiter begrenzt regelmäßig die Leistung der ganzen Erntestraße. Ferner dauert das manuelle Abladen relativ lange und bindet den Transportwagen am Abladeplatz der Pflückstraße, was die notwendige Anzahl an Schleppern und Wagen vergrößert.

Bekannt sind auch spezielle und kompliziertere Einzweck-Transportwagen mit wanderndem Boden zum Entladen der Hopfenreben, die nicht mehr vom Schlepper an-bzw. abgekuppelt werden müssen und bei denen die Abladezeiten wesentlich verkürzt sind. Nachteilig ist jedoch die rauhe Behandlung der Reben beim Entladen, die mühsame Handarbeit beim Einhängen der einzelnen Hopfenreben in die Pflückstraße und die vermehrten Verunreinigungen.

Aufgabe der Erfindung ist es, die Nachteile bekannter Einrichtungen zu beseitigen, und zwar insbesondere die Qualität des Endproduktes zu steigern, Beschädigungen und Verunreinigungen sowie den Anteil an Handarbeit zu verringern und die Betriebssicherheit durch die Begrenzung riskanter Arbeiten zu verbessern.

Das Wesen der Erfindung liegt darin, daß die Mulde einen länglichen zylinderförmigen Boden aufweist, der in die Seitenwände übergeht, und in ihrem Vorderteil mit Spännern für den Anschluß und die Abtrennung des abtrennbaren Rotationsspeichers der Hopfenreben versehen ist, wobei am Rahmen ein Teleskop-Mechanismus mit einer Aufhängevorrichtung vorgesehen ist und die lenkbare Achse eine Arretierung zur Aufhebung ihrer Lenkbarkeit im Verkehr enthält, welche dem Teleskop-Mechanismus zugeordnet ist.

Eine Weiterbildung liegt darin, daß an einer der Seitenwände eine einstellbare und abgefederte Haube mit einer Anlaufkante vorgesehen ist.

Bei einer konstruktiv einfachen und funktionell zuverlässigen Ausgestaltung ist die Arretiervorrichtung durch eine in einer Hülse abgefedert angeordnete Klinke ausgebildet, deren eines Ende auf einer an der lenkbaren Achse angeordneten und mit einem Ausschnitt versehenen Kulisse orientiert ist und deren zweites Ende mittels des Hebels im Eingriff mit einer Zugstange steht, die in die Vorschubbahn des Vorsprunges des verschiebbaren Teiles des Teleskop-Mechanismus vorsteht, die durch einen Hydraulikzylinder und eine teleskopische Verlängerungsstange gebildet ist.

Zweckmäßig ist die längliche Achse des zylinderförmigen Bodens mit der Achse des abtrennbaren Rotationsspeichers zumindest annähernd gleichlaufend ausgerichtet.

Die Vorteile des erfindungsgemäßen Erntewagens liegen darin, daß im Hopfengarten die Hopfenreben vor der Schneideeinrichtung geschnitten und geordnet in horizontaler Lage in die Trogmulde gelegt werden, wobei ihre abgeschnittenen Enden im abschaltbaren Rotationsspeicher dauerhaft verankert bleiben, der durch die Spannvorrichtung, d.h. durch die Spänner, auf dem Vorderteil des Transportwagens befestigt ist. Bei der fortschreitenden Füllung der Trogmulde tritt eine langsame und schonende Verdrehung der verankerten Rebenenden ein, so daß beim Füllen des Speichers ein Rebenbündel mit den in eine Schraubenlinie gleichmäßig aufgedrehten Reben entsteht. Die Lösung des Transportwagens und die mögliche Änderung seines Achsabstandes zum Zugmittel gewährleistet eine kontinuierliche Be-und Entladung - bei verkürztem Achsabstand - und einen verkehrssicheren Fahrbetrieb bei verlängertem Achsabstand. Die einstellbare und abgefederte Seitenwand des Transportwagens begünstigt ein gleichmäßiges Ausrichten der Hopfenreben ·und vermindert Ernteverluste, besonders bei der Ernte von Säulenreihen.

Einen sicheren Fahrbetrieb gewährleistet die besondere Achse des Transportwagens, welche in der Arbeitsstellung lenkbar ist und in der Transportstellung arretiert ist. Die Arretiervorrichtung kann in Abhängigkeit von der Stellung der teleskopischen Verlängerungsstange die Lenkbarkeit in der eingestellten Mittelstellung verriegeln.

Eine besonders schonende Handhabung des Ernteguts wird dadurch gewährleistet, daß das auf dem Wagen gebildete ganze Hopfenrebenbündel in einem Vorgang entladen wird, und zwar durch Aufheben aus der Mulde des Transportwagens in die vertikale Position so, daß die Reben mit dem Boden nicht in Berührung kommen und nicht verschmutzen können.

Die Arbeitssicherheit und -hygiene wird vergrößert, weil die Handarbeiten auf dem Aufhängeplatz wesentlich vermindert sind und das An-und Abkuppeln des Transportwagens vom Zugmittel entfällt. Verluste und Beschädigungen des Ernteguts bei der Beladung, beim Transport und beim Entladen werden durch die glatten kantenlosen Wände der Trogmulde beträchtlich reduziert.

Im folgenden wird ein bevorzugtes Ausführungsbeispiel der Erfindung anhand der schematischen Zeichnung ausführlich beschrieben. Es zeigen:

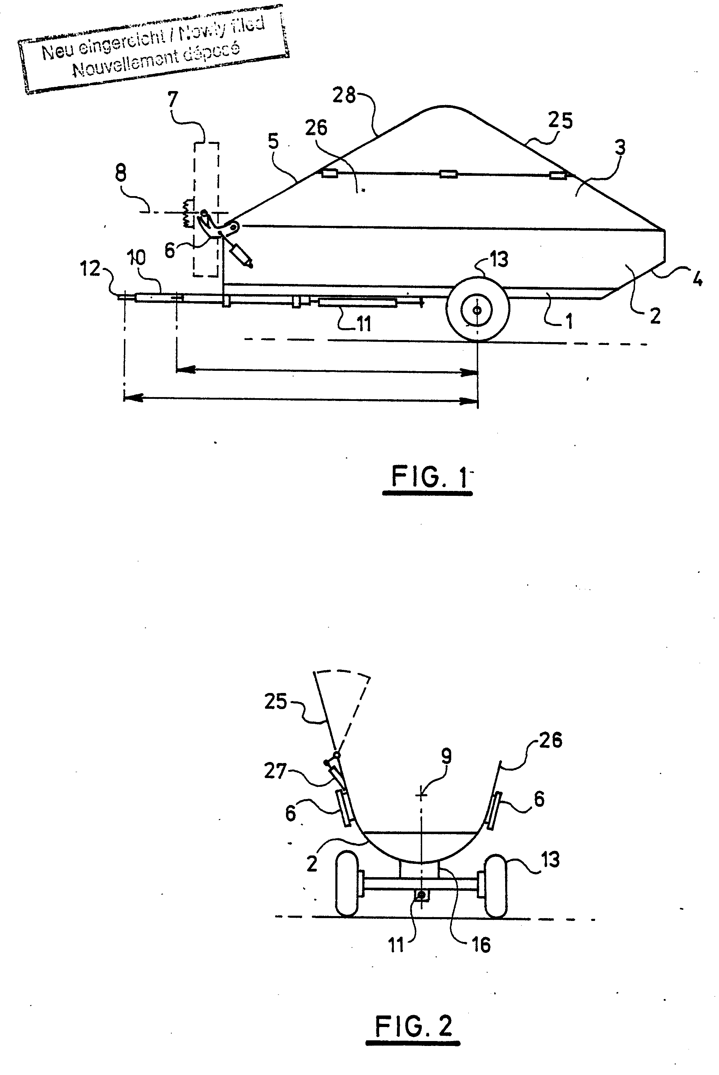

Fig. 1 einen Transportwagen in Seitenansicht;

Fig. 2 den Transportwagen in Stirnansicht, und

Fig. 3 die Arretiervorrichtung in Draufsicht.

Der dargestellte Transportwagen besitzt einen Rahmen 1, der einen festen muldenförmigen Trog trägt, dessen Seitenwände 26 in einen langgestreckten teilzylindrischen Boden 2 übergehen. Der muldenförmige Trog hat an seinem Hinterteil 3 einen schrägen Bodenteil 4. Im Vorderteil 5 ist eine Spannvorrichtung 6, z.B. motorisch betätigbare Spannhaken, zum Ankuppeln eines Rotationsspeichers 7 vor gesehen , dessen Achse 8 mindestens annähernd mit der Längsachse 9 des zylinderförmigen Bodens 2 gleichlaufend ist. In den Speicher 7 werden die Stengel der Hopfenreben dicht nebeneinander festgeklemmt, so daß ein "Kranz" von Hopfenreben entsteht.

Am Rahmen 1 ist eine teleskopische Vorrichtung vorgesehen, die eine Verlängerungsstange 10 mit der Aufhängevorrichtung 12, z.B. einer Aufhängeöse, und einen Hydraulikzylinder 11 enthält, der z.B. vom Schlepperfahrer betätigt wird.

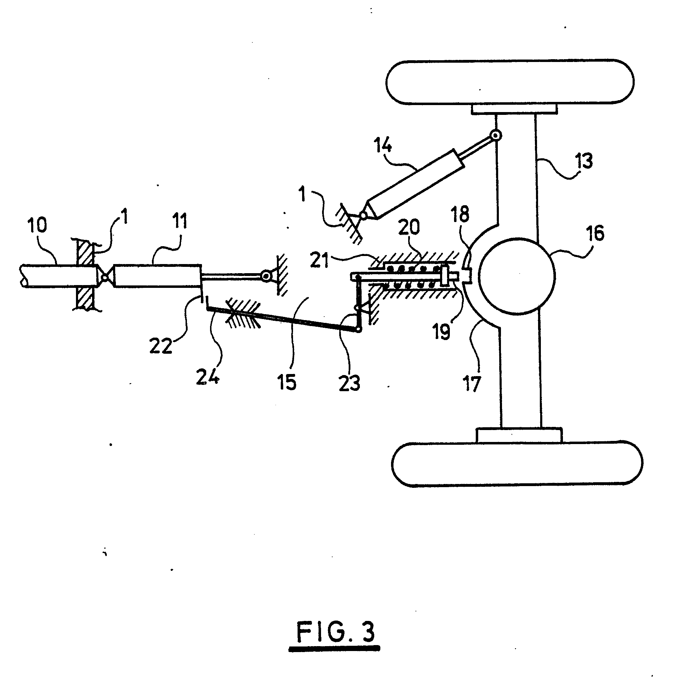

Die einzige Achse 13 ist in einem begrenzten Bereich durch den Zylinder 14 lenkbar, der ebenfalls vom Schlepperfahrer betätigt wird. Aus der Zeichnung (Fig. 3) ist die Anordnung der lenkbaren Achse 13 mit einer Drehscheibe 16 ersichtlich. Es ist aber auch möglich, eine Einzellenkung der Räder und eine starre Achse vorzusehen. Mit der lenkbaren Achse 13 ist eine Arretiervorrichtung 15 für die Verriegelung der Achse 13 in der Transportstellung auf den Verkehrswegen verbunden. Die Betätigung der Arretiervorrichtung 15 erfolgt in Abhängigkeit von der Position der Teleskop-Vorrichtung selbsttätig.

Bei der Ausführung nach Fig. 3 ist zur Arretierung der Achse 13 eine Kulisse 17 vorgesehen, die auf der lenkbaren Achse 13 angeordnet und mit einem Ausschnitt 18 versehen ist, in den eine Klinke 19 von einer Feder 20 eingedrückt wird. Die Klinke 19 und die Feder 20 sind in einer mit dem Rahmen 1 verbundenen Hülse 21 geführt.

Mit der Teleskop-Vorrichtung, z.B. mit dem Hydraulikzylinder 11, ist ein seitlicher Vorsprung 22 verbunden, der in der eingeschobenen Stellung der teleskopischen Verlängerungsstange 10 an einer Zugstange 24 anschlägt, die durch einen Schwenkhebel 23 mit der Klinke 19 verbunden ist.

Auf einer der Seitenwände 26 ist eine abgefederte und einstellbare Haube 25 mit einer Anlaufkante 28 zur besseren Orientierung der Hopfenreben beim Einfallen in den Trog schwenkbar befestigt. Die Position dieser Haube 25 ist in einem begrenzten Bereich durch den Hilfszylinder 27 verstellbar und gleichzeitig in einem begrenzten Bereich abgefedert.

Die Funktion des beschriebenen Transportwagens ist folgende:

Bei der Hopfenrebenernte werden die Reben von der am Zugmittel befestigten nicht dargestellten Abschneide-und Niederreißvorrichtung abgeschnitten und in den abtrennbaren Rotationsspeicher 7 während der Fahrt der Erntemaschine eingebracht. Dabei ist die lenkbare Achse 13 des Transportwagens in eine solche Position eingestellt, daß nach dem Abreißen der Hopfenreben vom Drahtnetz diese in seinen Trog frei fallen. Dabei bleiben die abgeschnittenen Stengel fest im Rotationsspeicher 7 verankert, welcher bei diesem Vorgang an ein nicht dargestelltes Zugmittel, meist an einen Schlepper, angekuppelt ist. Die Verlängerungsstange 10 ist bei dieser Tätigkeit durch die Einwirkung des Hydraulikzylinders 11 in die verkürzte Stellung eingestellt, so daß der Vorsprung 22 durch Einwirkung auf die Zugstange 24 die Klinke 19 außer Eingriff gebracht hat und die Kulisse 17 mit der Achse 13 sich in der Abhängigkeit auf der Position des Lenkzylinders 14 verdrehen kann.

Bei fortschreitender Füllung des Trogs werden die im Rotationsspeicher verankerten Rebenenden bzw. -stengel langsam gedreht, während die gegenüberliegenden Rebenenden im Trog frei gelagert sind. Die Verdrehung des Rotationsspeichers 7 um die horizontale Achse 8 wird von einem nicht dargestellten Zugmittel abgeleitet, dessen Antriebsorgan in dieser Phase in Eingriff mit dem Rotationsspeicher 7 steht. Dadurch wird das Bündel der be ladenen Reben zu einer Schraubenlinie verdreht, was die Ladekapazität des Transportwagens erhöht.

Bei der Ernte von Säulenreihen kann die Haube 25 der Seitenwand 26 mittels des Hilfszylinders 27 dicht an die nicht dargestellten Säulen eingestellt werden, so daß die Anlaufkante 28 der abgefederten Seitenwand 26 diese Säulen leicht kopiert.

Nach der Beladung des Rotationsspeichers 7 und nach Ausrichten der Garnitur in einen annähernd gestreckten Zustand wird der Rotationsspeicher 7 mittels der Spannvorrichtung am Transportwagen arretiert und gleichzeitig wird mittels des Hydraulikzylinders 11 die Verlängerungsstange 10 des Rahmens 1 in die verlängerte Stellung verschoben. Dadurch wird der Achsabstand der Garnitur verlängert und der Rotationsspeicher 7 wird vom Zugmittel abgekuppelt. Als Folge der Lageänderung des Vorsprunges 22 wird die Zugstange 24 und damit auch der Hebel 23 gelöst, wobei die Feder 20 die Klinke 19 in den Ausschnitt 18 der Kulisse 17 eindrückt, sobald die Achse 13 in die gerade Stellung gelangt. Durch diese Maßnahmen wird ein sicherer Verkehr der Garnitur auf den Verkehrswegen gewährleistet. Der schräg erhöhte Bodenteil 4 in dem Hinterteil 3 des Trogs vermeidet Verluste des Ernteguts beim Einlegen der Reben in den Trog oder beim Transport.

Das beschriebene Beförderungsmittel ist auch für den Transport von anderen Materialien oder Produkten anwendbar. Ferner ist die Erfindung nicht auf die dargestellte Ausführung beschränkt. So kann der Transportwagen auch einen anders geformten, z.B. parabelförmigen, Querschnitt haben. Ferner können die Trogwände und der Trogboden auch von einem nach innen durchhängenden flexiblen Material, wie einem festen Gewebe oder einer festen Folie, gebildet werden, die an geeigneten Stellen am Wagenrahmen fixiert ist. Schließlich kann der Transportwagen auch mehrere Achsen und an jedem Ende eine Halterungsvorrichtung 6 zur wahlweisen Montage des Rotationsspeichers 7 am einen oder anderen Ende besitzen.

Nach dem vorteilhaft durch mechanische Hebezeuge erfolgten Einhängen des vom Wagen gelösten Rotationsspeichers in die Tragvorrichtung (Zwischenspeicher) der Pflückstraße erfolgt die Aufdrehung und damit Vereinzelung der Hopfenreben aus dem verdrehten Bündel weitgehend selbsttätig und schonend.

## Ansprüche

1. Transportwagen zum Ernten und Transportieren von Hopfenreben, der einen auf einem Fahrgestell angeordneten wannenförmigen Laderaum aufweist,
dadurch gekennzeichnet,
- daß der muldenförmige Trog einen langgestreckten, bogenförmigen Boden (2) aufweist, der in glatte Seitenwände (26) übergeht und
- daß an einem Ende des Trogs eine Vorrichtung (6) zur lösbaren Halterung eines motorisch verdrehbaren Rotationsspeichers (7) für die Hopfenreben vorgesehen ist.

2. Transportwagen nach Anspruch 1,
dadurch gekennzeichnet,
daß am Rahmen (1) eine teleskopische Aufhängevorrichtung (12) vorgesehen ist und daß die lenkbare Achse (13) durch eine von der teleskopischen Aufhängevorrichtung (12) betätigbare Arretiervorrichtung (15) in der mittleren Fahrstellung fixierbar ist.

3. Transportwagen nach Anspruch 1 oder 2,
dadurch gekennzeichnet,
daß an mindestens eine Seitenwand (26) eine einstellbare und abgefederte Leitplatte bzw. Haube (25) mit einer schrägen Anlaufkante (28) vorgesehen ist.

4. Transportwagen nach einem der Ansprüche 1 bis 3,
dadurch gekennzeichnet,
daß die Arretiervorrichtung (15) eine in der Hülse (21) abgefedert angeordnete Klinke (19) enthält, deren freies Ende auf eine an der lenkbaren Achse (13) angeordnete und mit einem Ausschnitt (18) versehene Kulisse (17) orientiert ist und deren anderes Ende über einen Hebel (23) in Eingriff mit einer Zugstange (24) steht, die in die Vorschubbahn eines Vorsprunges (22) des verschiebbaren Teiles der teleskopischen Vorrichtung (12) steht, die durch einen Hydraulikzylinder (11) und eine Verlängerungsstange (10) gebildet ist.

5. Transportwagen nach einem der Ansprüche 1 bis 4,
dadurch gekennzeichnet,
daß die Längsachse (9) des wannenförmigen Bodens (2) zur Achse (8) des abtrennbaren Rotationsspeichers (7) zumindest annähernd parallel verläuft.

6. Transportwagen nach einem der Ansprüche 1 bis 5,
dadurch gekennzeichnet,
daß Drehspeicher (7) einen mit einem Drehantrieb kuppelbaren Rotationskörper mit einer Vielzahl von Klemmstellen an seinem Außenumfang aufweist, in denen die abgeschnittenen Stengel der Hopfenreben nebeneinander festklemmbar sind.

## FIG. 1

## FIG. 2

**FIG. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 093 254  (SAMMARCO) <br> * Spalte 1, Zeilen 57-72; Spalten 2,3; Abbildungen 1-6 * <br> --- | 1,5 | A 01 D   46/02 <br> A 01 D   90/12 |
| A | GB-A-1 062 084  (MASSEY-FERGUSON) <br> * Seite 3, Zeilen 23-130; Seite 3, Zeilen 1-20; Abbildungen 1-3 * <br> --- | 2 | |
| A | DE-A-1 087 012  (BAYERISCHE PFLUGFABRIK) <br> * Spalte 2, Zeilen 53,54; Spalte 3, Zeilen 1-17; Abbildungen 1-3 * <br> --- | 3 | |
| A | DE-A-3 225 437  (SOLLER) <br> * Seiten 7,8; Abbildungen 1-6 * <br> --- | 1,3 | |
| A | FR-A-1 455 981  (TEXAS) <br> * Abbildungen 4,5,12,13; Seiten 4,8 * <br> ----- | 4 | |
| | | | **RECHERCHIERTE SACHGEBIETE (Int. Cl.4)** <br><br> A 01 D |

Der vorliegende Recherchenbericht wurde für alle Patentansprüche erstellt

| Recherchenort | Abschlußdatum der Recherche | Prüfer |
|---|---|---|
| DEN HAAG | 20-06-1988 | VERMANDER R.H. |